# EUROPEAN PATENT APPLICATION

(11) **EP 1 385 350 A1**
(43) Date of publication of application: **28.01.2004**
(21) Application number: 02016538.7
(22) Date of filing: 24.07.2002
(51) Int. Cl.: H04Q 7/38

(54) **Method of configuring services in a telecommunications network**

(71) Applicant: ALCATEL, 75008 Paris (FR)
(72) Inventor: Allerborn, Wilhelm, Dipl.-Ing., 71254 Ditzingen (DE); Egler, Wolfgang, Dr.rer.nat, 70734 Fellbach (DE)
(74) Representative: Dreiss, Fuhlendorf, Steimle & Becker

(57) **Abstract**

The present invention relates to a method of operating a telecommunications network, in particular a mobile telecommunications network, wherein at least one service control point (SCP) comprising service data (SD) provides services to a network user. Said network user controls said service data (SD) in said service control point (SCP) by means of a messaging service.

## Description

The present invention relates to a method of operating a telecommunications network, in particular a mobile telecommunications network, wherein at least one service control point comprising service data provides services to a network user.

The present invention further relates to a telecommunications network, wherein at least one service control point comprising service data provides services to a network user.

The present invention also relates to a terminal for a telecommunications network, wherein at least one service control point comprising service data provides services to a network user.

Further, the present invention relates to a service control point of a telecommunications network, in particular a mobile telecommunications network, which comprises service data and provides services to a network user.

Prior art discloses various methods and possibilities of manipulating service data located in said service control point of said telecommunications network.

A well-known method employs forwarding so-called unstructured supplementary service data (USSD). The main disadvantage of this approach is the lacking flexibility of editing unstructured supplementary service data strings by the network user. Most often, telecommunication terminals do not provide for appropriate means of editing USSD strings such as a keyboard or at least a set of special keys, which in consequence leads to an implementation of USSD strings in said terminal based on a menu system from which the network user can select various USSD strings which have been preprogrammed to a non-volatile memory of said terminal.

Hence, a user can only select a limited number of preprogrammed USSD strings, thus not being able to alter said preprogrammed strings or even enter a complete user-defined string.

Another well-known method of manipulating service data within said service control point is possible by using the so-called wireless application protocol (WAP). The disadvantage of said wireless application protocol is the small number of telecommunication network terminals supporting said wireless application protocol.

In view of the disadvantages of prior art, it is an object of the present invention to provide a more flexible and user-friendly telecommunications network and a method of operating such a telecommunications network.

This object is achieved by said network user controlling said service data in said service control point by means of a messaging service.

In contrast to the known USSD- or WAP-approach, respectively, using a messaging service provides the desired flexibility of entering user-defined data for controlling said service data located in said service control point.

An advantageous embodiment of the present invention is characterized by said messaging service being a text-based messaging service, which offers easy editing of strings that can be used to control said service data in the service control point. In particular, it is very useful to employ a short message service and/or an extended message service or the like.

A further advantageous embodiment of the present invention is characterized by achieving user control of said service data by sending a message to said service control point.

Another very advantageous embodiment of the present invention is characterized by forwarding message contents, in particular a message text, to the service control point. In contrast to prior art approaches, where contents or message text, respectively, is not forwarded to said service control point, with the method according to the present invention it is possible to send a complete short message text to said service control point, where it can be evaluated.

A further advantageous embodiment of the present invention is characterized in that said message contains a destination address denoting said service control point as destination of said message.

A further advantageous embodiment of the present invention is characterized in that said service control point performs service control according to the contents of said message.

Another very advantageous embodiment of the present invention is characterized by said services comprising prepaid calls and/or virtual private networks and/or position related services and/or banking services and/or payment services and/or screening and/or call forwarding and/or selective call forwarding and/or account card calling and/or language settings and/or message blocking, in particular selective message blocking, and/or televoting and/or wakeup calls and/or conference calls.

The high flexibility that is guaranteed by evaluating the short message or at least the textual contents of the short message in said service control point can advantageously be used to control complex services as those enumerated above. A short message e.g. may contain numerous control strings as well as parameters that can be entered by the user to manipulate said services.

A further solution to the object of the present invention is given by a telecommunications network, wherein at least one service control point comprising service data provides services to a network user, wherein said network user can control said service data in said service control point by means of a messaging service.

Yet another solution to the object of the present invention is given by a terminal for a telecommunications network, wherein at least one service control point comprising service data provides services to a network user, characterized in that said network user can control said service data in said service control point by means of a messaging service.

Yet another solution to the object of the present invention is given by a service control point of a telecommunications network, in particular a mobile telecommunications network, which comprises service data and provides services to a network user, characterized by performing service control, said service control depending on said service data and/or messages sent to said service control point by said network user.

Further features and advantages of the present invention are explained in more detail below with the aid of the accompanying drawing.

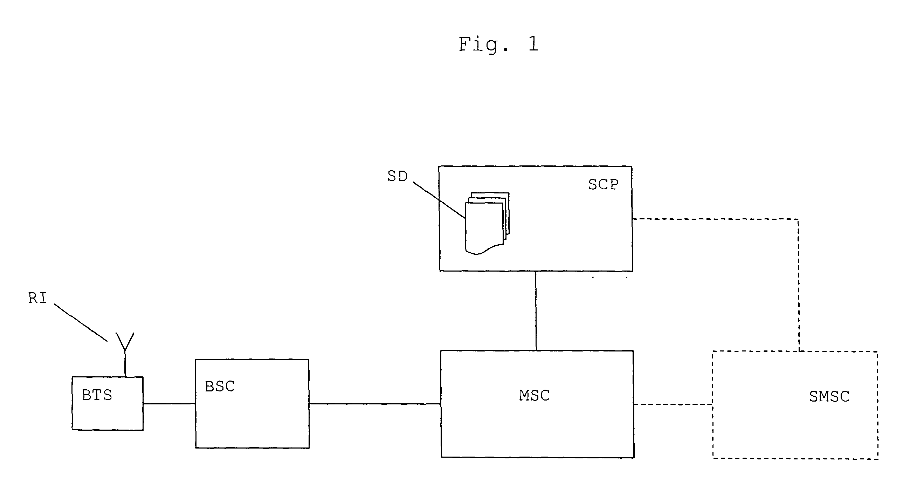

Figure 1 shows a base transceiver station BTS which is used in a telecommunications network to communicate with mobile telecommunications network terminals (not displayed) via a radio interface RI.

The base transceiver station BTS is connected to a base station controller BSC which controls said base transceiver station BTS. The base transceiver station BTS and the base station controller BSC form a so-called base station system.

According to Fig. 1, a mobile switching center MSC is provided within said telecommunications network. The mobile switching center MSC routes data from one base station system to another one (not shown). Additionally, the mobile switching center MSC routes data of the telecommunications network to a service control point SCP that is also displayed in Fig. 1.

The service control point SCP provides services to a user of the telecommunications network such as handling of prepaid calls and/or virtual private networks and/or position related services and/or banking services and/or payment services and/or screening and/or call forwarding and/or selective call forwarding and/or account card calling and/or language settings and/or message blocking, in particular selective message blocking, and/or televoting and/or wakeup calls and/or conference calls.

For this purpose, the service control point SCP comprises service data SD related to the above listed services that determines execution/operation of said services. For instance, in conjunction with a wakeup call service, said service data SD comprises user-specific parameters such as the wakeup call time or the like.

For enabling the user to alter specific parameters of a service provided by the service control point SCP, user control of said service data SD is provided based on a short message service (SMS), wherein the user composes a short message containing one or more command strings that are provided for manipulating said service data SD within the service control point SCP.

Since editing short messages is a feature provided by the plurality of mobile terminals and the command string(s) are represented by the short message text itself, nearly every network user can easily compose a short message containing one or more command strings for control of service data SD.

The short message containing said command string(s) is sent to the service control point SCP via the mobile switching center MSC. This can be achieved by defining a destination address denoting the service control point SCP of the telecommunications network within the short message.

Alternatively, as indicated by the dashed lines, the short message can first be routed to a short message service center SMSC, which routes the message to the service control point SCP.

Instead of the complete destination address of the service control point SCP, an appropriate abbreviation such as a short code can be used to simplify addressing the service control point SCP. The short code has to be resolved/recognized within the mobile switching center MSC.

Upon reception of the short message containing command string(s) in the service control point SCP, the service control point SCP evaluates said command string(s) represented by the message text of the received short message.

After evaluation, the service control point SCP performs service control as required via said short message. For instance, if a command string for setting the time of a wakeup call is defined as "TIME XXXX", wherein "TIME" is a command indicating that the wakeup time is to be altered and "XXXX" is the corresponding wakeup time information in a predefined time format, the network user can set the time for a wakeup call to a time "YYYY" by sending a short message with the text "TIME YYYY" to the address of the service control point SCP.

Accordingly, any other service provided by the service control point SCP, can be controlled by the user. It is also possible to provide the command string with a prefix denoting which service is to be modified, if there are several services requiring similar parameters such as time values or the like.

When using an email/short message service (SMS) - gateway, it is also possible to control the services of the service control point SCP by sending an email to the gateway that is converted to a short message which is finally routed to the service control point SCP.

Feedback from the service control point SCP to the user is also possible by sending a short message from the service control point SCP to the user. This direction of short message transfer can be used for informing the user about valid command strings or parameter ranges and so on.

Banking services can also be controlled using the mechanism of the present invention, since security information such as a PIN-number or a transaction number or further information identifying the user can be sent to the service control point SCP via a short message, too.

The parameters for conference calls and for configuration of a virtual private network can also be transmitted to the service control point SCP via a short message, as well as user-dependent billing information for account card calling or handling prepaid calls.

Another important application of the method of the present invention is (security) screening of short messages. Since the short message text contents of each short message is routed from the mobile switching center MSC to the service control point SCP, detection algorithms can be applied to the short message text within the service control point SCP to discover suspicious strings within the short message text.

The present invention is not limited to telecommunications networks having only one service control point SCP.

## Claims

1. Method of operating a telecommunications network, in particular a mobile telecommunications network, wherein at least one service control point (SCP) comprising service data (SD) provides services to a network user, **characterized in that** said network user controls said service data (SD) in said service control point (SCP) by means of a messaging service.

2. Method according to claim 1, **characterized in that** said messaging service is a text-based messaging service.

3. Method according to one of the preceding claims, **characterized in that** said messaging service is a short message service (SMS) and/or an extended message service (EMS) or the like.

4. Method according to one of the preceding claims, **characterized in that** user control of service data (SD) is achieved by sending a message to said service control point (SCP).

5. Method according to claim 4, **characterized in that** message contents, in particular a message text, are/is forwarded to the service control point (SCP).

6. Method according to claim 4 or 5, **characterized in that** said message contains a destination address denoting said service control point (SCP) as destination of said message.

7. Method according to one of claims 4 to 6, **characterized in that** said service control point (SCP) performs service control according to the contents of said message.

8. Method according to one of the preceding claims, **characterized by** said services comprising prepaid calls and/or virtual private networks and/or position related services and/or banking services and/or payment services and/or screening and/or call forwarding and/or selective call forwarding and/or account card calling and/or language settings and/or message blocking, in particular selective message blocking, and/or televoting and/or wakeup calls and/or conference calls.

9. Telecommunications network, wherein at least one service control point (SCP) comprising service data (SD) provides services to a network user, **characterized in that** said network user can control said service data (SD) in said service control point (SCP) by means of a messaging service.

10. Telecommunications network according to claim 9, **characterized by** being capable of performing a method according to any of the claims 2 - 8.

11. Terminal for a telecommunications network, wherein at least one service control point (SCP) comprising service data (SD) provides services to a network user, **characterized in that** said network user can control said service data (SD) in said service control point (SCP) by means of a messaging service.

12. Terminal according to claim 11, **characterized by** being capable of performing a method according to any of the claims 2 - 8.

13. Service control point (SCP) of a telecommunications network, in particular a mobile telecommunications network, which comprises service data (SD) and provides services to a network user, **characterized by** performing service control, said service control depending on said service data (SD) and/or messages sent to said service control point (SCP) by said network user.

14. Service control point (SCP) according to claim 13, **characterized by** being capable of performing a method according to any of the claims 2 - 8.
